# EUROPEAN PATENT APPLICATION

(11) **EP 2 778 446 A1**
(43) Date of publication of application: **17.09.2014**
(21) Application number: 12846866.7
(22) Date of filing: 15.10.2012
(51) Int. Cl.: F16C 11/06, B62D 7/16, F16J 3/04, F16J 15/52

(54) **DUST COVER FOR BALL JOINT**

(30) Priority: 07.11.2011 JP 2011242963; 02.02.2012 JP 2012020434
(71) Applicant: NOK Corporation, Tokyo 105-8585 (JP)
(72) Inventor: ISHIMORI Junichi, Makinohara-shi Shizuoka 421-0532 (JP)
(74) Representative: TBK
(86) International application number: PCT/JP2012/076568
(87) International publication number: WO 2013/069411

(57) **Abstract**

The purpose of the present invention is to provide a dust cover for a ball joint, the dust cover being configured so that the problem of the opening phenomenon of the small-diameter opening section of the dust cover is effectively eliminated even under low-temperature conditions in which the physical properties of an elastic material degrade. This dust cover consisting of an elastic material and used for a ball joint is configured so that a ball head formed at one end of the ball stud is held within a socket, a shaft at the other end of the ball stud is fastened and affixed to a knuckle, a large-diameter opening section at one end is affixed to and retained by the outer peripheral surface of the socket, and a small-diameter opening section at the other end is retained by the shaft. An annular stepped section is formed at the inner periphery-side end of the knuckle, the inner periphery-side end being in contact with the dust cover. A part of the small-diameter opening section is inserted in the space formed by the annular stepped section and the outer peripheral surface of the shaft, and the outer peripheral surface of the small-diameter opening section is restrained by the inner peripheral surface of the annular stepped section.

## Description

### BACKGROUND OF THE INVENTION

### Field of the Invention

The present invention relates to a dust cover for a ball joint.

Further, the present invention relates to a dust cover for a ball joint which is used in an automobile suspension device and a steering device.

### Description of the Conventional Art

Conventionally, as a ball joint to which a dust cover is installed for the purpose of a dust prevention and a water prevention in a ball joint coupling portion, there has been known a dust cover for a ball joint which is described in Fig. 6 (patent document 1).

In a seal structure of this kind of dust cover for the ball joint, a spherical head portion 200 formed in one end of a ball stud 100 is retained within a socket 300.

Further, a shaft 400 in the other end of the ball stud 100 is fastened and fixed to a knuckle 500.

On the other hand, a one end large-diameter opening portion 800 formed as an approximately C-shaped cross sectional form of a dust cover 600 made of a rubber-like elastic material is fixed and retained within an annular groove portion 310 which is formed in an outer peripheral surface of the socket 300 by an annular pressing ring 700, and the other end small-diameter opening portion 150 is retained to the shaft 400.

The pressing ring 700 employs a circlip which is formed approximately as a rectangular cross sectional shape.

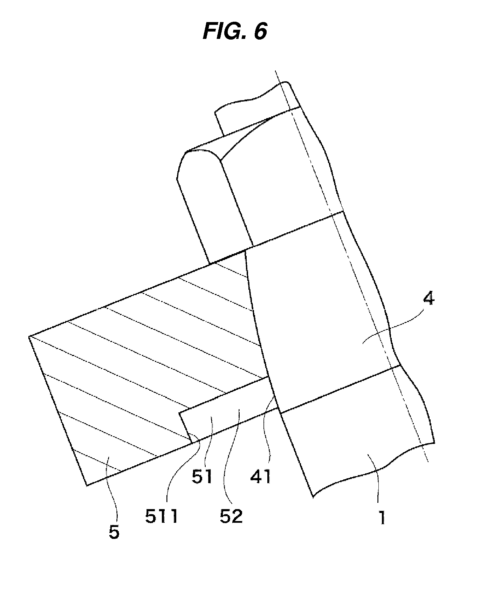

In this kind of conventional dust cover 600, in the case that the ball stud 100 oscillates in a state in which the ball stud 100 is inclined as shown in Fig. 6, a force expanding the small-diameter opening portion 150 acts in a side (a right side of the drawing) in which a film portion of the dust cover 600 is elongated. Accordingly, there is generated a so-called opening phenomenon of the small-diameter opening portion 150, that is, a contact between a lip portion of the small-diameter opening portion 150 and the knuckle 500 is disconnected.

As a result, there has been brought about a problem that a seal performance in the small-diameter portion 150 is lowered, and sediment or refuse intrudes into the dust cover 600 from the external portion.

Particularly, under a low temperature condition that a rubber physicality of a rubber material of the dust cover 600 is lowered or in a state in which the material is deteriorated, the problem of the opening phenomenon has significantly occurred.

In order to solve the problem mentioned above, it can be thought to make a thickness of the film portion of the dust cover 600 small, however, in the case that the thickness of the film portion of the dust cover 600 is made small, a mechanical strength of the film portion is lowered, thereby causing a risk that the film portion is early damaged. Further, a torque of the small-diameter opening portion 150 which is generated in conjunction with the oscillating motion of the ball stud 100 generates torsion in the film portion, thereby bringing about a problem that buckling is generated in the thin film portion due to the torsional action.

### PRIOR ART DOCUMENT

### Patent Document

Patent Document 1: Japanese Unexamined Patent Publication No. 62-137408

### Disclosure of the Invention

### Problem to be Solved by the Invention

The present invention is made by taking the problem mentioned above into consideration, and an object of the present invention is to provide a dust cover for a ball joint which can effectively dissolve the problem of the opening phenomenon in the small-diameter opening portion of the dust cover even under the low temperature condition that the physicality of the elastic material is lowered.

### Means for Solving the Problem

A dust cover for a ball joint according to the present invention is a dust cover for a ball joint structured such that a spherical head portion formed in one end of a ball stud is retained within a socket, a shaft in the other end of the ball stud is fastened and fixed to a knuckle, a one end large-diameter opening portion is fixed and retained to an outer peripheral surface of the socket, and the other end small-diameter opening portion is retained to the shaft, and made of an elastic material, wherein an annular step portion is formed in an inner peripheral side end portion which comes into contact with the dust cover in the knuckle, a part of the small-diameter opening portion is inserted into a space which is formed by the annular step portion and an outer peripheral surface of the shaft, and an outer peripheral surface of the small-diameter opening portion is constrained by an inner peripheral surface of the annular step portion.

### Effect of the Invention

The present invention achieves effects as described below.

According to the dust cover for the ball joint of the invention described in claim 1, it is possible to effectively dissolve the problem of the opening phenomenon in the small-diameter opening portion of the dust cover, even under the low temperature condition that the physicality of the elastic material is lowered.

Further, according to the dust cover for the ball joint of the invention described in claim 2, since a greater resisting force is achieved in relation to the force elongating the small-diameter opening portion, it is possible to more effectively dissolve the problem of the opening phenomenon in the small-diameter opening portion of the dust cover.

Further, according to the dust cover for the ball joint of the invention described in claim 3, since the greater resisting force is achieved in relation to the force elongating the small-diameter opening portion, it is possible to further effectively dissolve the problem of the opening phenomenon in the small-diameter opening portion of the dust cover.

Further, according to the dust cover for the ball joint of the invention described in claim 4, it is possible to enhance a seal performance between the small-diameter opening portion and the knuckle.

### Brief Description of the Drawings

Fig. 1 is a vertical cross sectional view of a dust cover for a ball joint according to the present invention;
Fig. 2 is a partly enlarged view of a small-diameter opening portion of the dust cover for the ball joint in Fig. 1;
Fig. 3 is a partly enlarged view of a knuckle before the dust cover for the ball joint in Fig. 1 is installed thereto;
Fig. 4 is a view of a dust cover for a ball joint in the other embodiment according to the present invention in the same manner as Fig. 2;
Fig. 5 is a view of a dust cover for a ball joint in further the other embodiment according to the present invention in the same manner as Fig. 2;
Fig. 6 is a view of a knuckle according to the other embodiment before the dust cover for the ball joint is installed thereto, in the same manner as Fig. 3; and

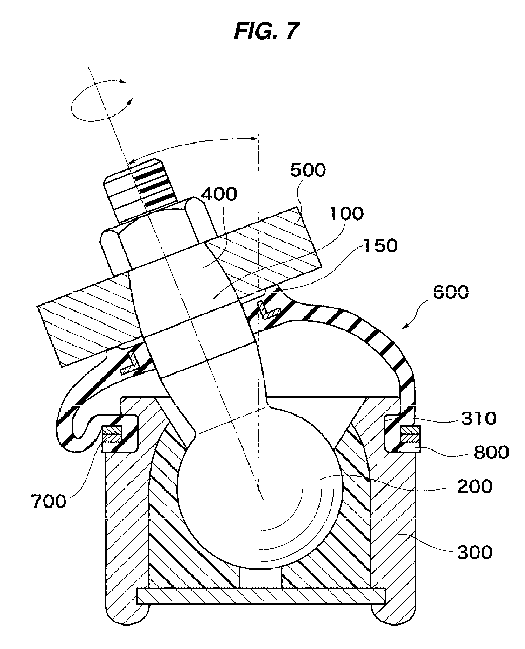

Fig. 7 is a vertical cross sectional view of a dust cover for a ball joint according to the prior art.

### Mode for Carrying Out the Invention

A description will be given of embodiments for executing the present invention.

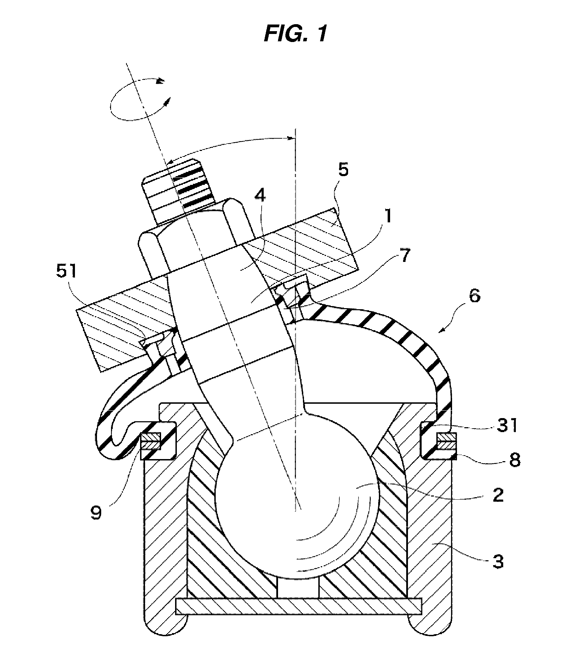

As shown in Figs. 1 to 3, a dust cover for a ball joint according to the present invention is provided with a basic structure in which a spherical head portion 2 formed in one end of a ball stud 1 is retained within a socket 3, a shaft 4 in the other end of the ball stud 1 is fastened and fixed to a knuckle 5, a one end large-diameter opening portion 8 is fixed and retained to an outer peripheral surface of the socket 3, and the other end small-diameter opening portion 7 is retained to the shaft 4.

Further, an annular step portion 51 is formed in an inner peripheral side end portion which comes into contact with a dust cover 6 in the knuckle 5, a part of the small-diameter opening portion 7 is inserted into a space 52 which is formed by the annular step portion 51 and an outer peripheral surface 41 of the shaft 4, and an outer peripheral surface 71 of the small-diameter opening portion 7 is constrained by an inner peripheral surface 511 of the annular step portion 51.

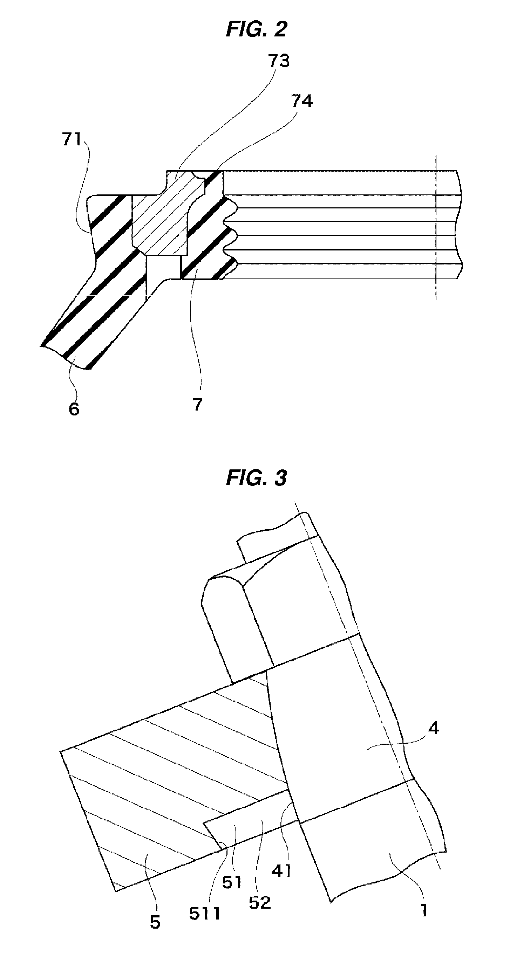

Further, the inner peripheral surface 511 of the annular step portion 51 is formed as a conical surface shape which is increased its diameter toward the space 52, as is apparent from Fig. 3.

Further, the outer peripheral surface 71 of the small-diameter opening portion 7 is formed as a conical surface shape (which is increased its diameter toward an upper side in Fig. 2) in correspondence to the conical surface shape of the inner peripheral surface 511.

As a result, it is possible to effectively dissolve the problem of the opening phenomenon in the small-diameter opening portion 7 of the dust cover 6 even under the low temperature condition that the physicality of the elastic material is lowered.

Further, since the small-diameter opening portion 7 is covered with the space 52, it is possible to more securely prevent the problem that the sediment or the refuse from the external portion intrudes into the dust cover 6 form the small-diameter opening portion 7.

Particularly, since the inner peripheral surface 511 of the annular step portion 51 and the outer peripheral surface 71 of the small-diameter opening portion 7 are both formed as the conical surface shapes which come into close contact with each other, the outer peripheral surface 71 of the small-diameter opening portion 7 acts on the inner peripheral surface 511 of the annular step portion 51 so that the outer peripheral surface 71 more strongly comes into close contact with the inner peripheral surface 511 as the small-diameter opening portion 7 is pulled by the film portion of the dust cover 6. Therefore, it is possible to securely dissolve the problem of the opening phenomenon in the small-diameter opening portion 7.

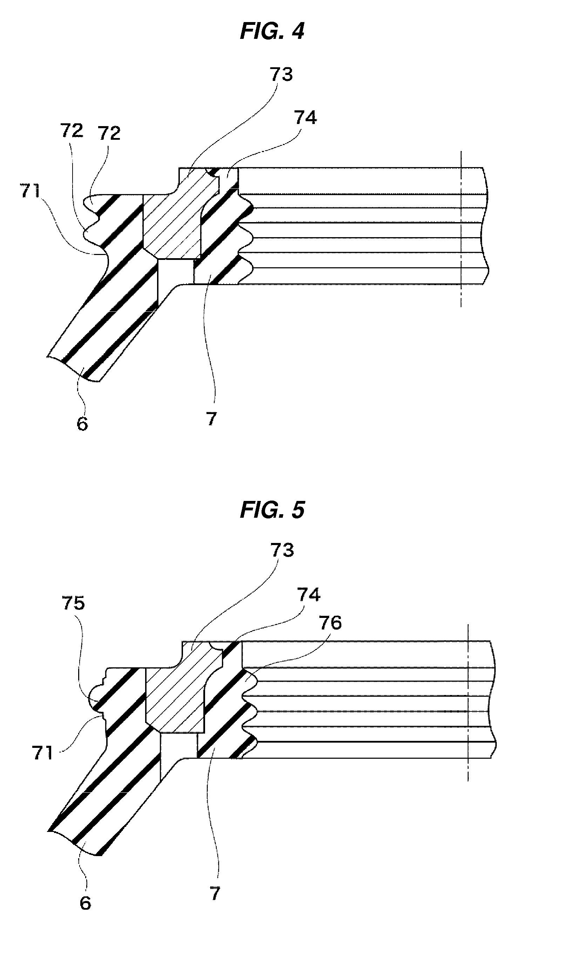

In the present embodiment, the inner peripheral surface 511 of the annular step portion 51 is formed as the conical surface shape, however, may be formed as a cylindrical surface shape as shown in Fig. 5.

Next, a description will be given of the other embodiment of the dust cover for the ball joint according to the present invention with reference to Fig. 4.

A difference from the previously described embodiment exists in a point that an annular lip 72 coming into contact with the inner peripheral surface 511 of the annular step portion 51 is formed in the outer peripheral surface 71 of the small-diameter opening portion 7, in place of the structure in which the outer peripheral surface 71 of the small-diameter opening portion 7 is formed as the conical surface shape.

As a result, it is possible to further enhance the seal performance between the small-diameter opening portion 7 and the knuckle 5.

Next, a description will be given of further the other embodiment of the dust cover for the ball joint according to the present invention with reference to Fig. 5.

A difference from the other embodiment described with reference to Fig. 4 exists in a point that a plurality of projections 75 coming into contact with the inner peripheral surface 511 of the annular step portion 51 are formed on the outer peripheral surface 71 of the small-diameter opening portion 7 so as to be circumferentially uniform, in place of the annular lip 72 which comes into contact with the inner peripheral surface 511 of the annular step portion 51.

Accordingly, the area in which the projection 75 and the inner peripheral surface 511 are in contact is reduced in comparison with the other embodiment in Fig. 4, and it is possible to reduce a sliding torque caused by a sliding motion between the knuckle 5 and the ball stud 1, and the small-diameter opening portion 7.

As a result, the dust cover 6 according to the present embodiment can effectively suppress the torsion (the buckling) of the film portion of the dust cover 6.

On the other hand, it is not possible to prevent the dust from intruding into the dust cover 6 from the external portion by a plurality of projections 75 formed so as to be circumferentially uniform, as is different from the annular lip 72, however, since an annular seal 76 which comes into contact with the outer peripheral surfaced of the shaft 4 in the ball stud 1 in a sealing manner exists in the inner peripheral surface of the small-diameter opening portion 7, the dust does not enter into the dust cover 6.

Further, for the shape of the projection 75, various shapes, for example, a semispherical shape, a semi-elliptic shape and a triangular pyramid shape can be appropriately selected and used.

Further, a grease is sealed into the dust cover 6.

Further, a material of the dust cover 6 can be appropriately selected from a rubber-like elastic material, for example, a chloroprene or thermoplastic elastomer, for example, a polyester elastomer and a thermoplastic polyurethane in correspondence to an intended use so as to be used.

On the other hand, the one end large-diameter opening portion 8 approximately formed as the C-shaped form in the dust cover 6 made of the rubber-like elastic material is structured such as to be fixed and retained into the annular groove portion 31 formed in the outer peripheral surface of the socket 3 by an annular pressing ring 9.

A circlip approximately formed as a rectangular cross sectional shape is used for the pressing ring 9.

Further, a dust lip 74 coming into elastic contact with the knuckle 5 is provided in the small-diameter opening portion 7, and a reinforcing ring 73 is buried in the small-diameter opening portion 7.

Accordingly, it is possible to more effectively prevent the dust from intruding into the dust cover 6 from the external portion.

Further, in a material of the reinforcing ring 73, a metal material or a resin material is appropriately selected and used in correspondence to an intended use.

Further, it goes without saying that the present invention is not limited to the best mode for carrying out the invention mentioned above, but can employ the other various structures without deflecting from the scope of the present invention.

### Industrial Applicability

The invention can be used in the ball joint which is used in the suspension device and the steering device of the motor vehicle.

**Description of Reference Numerals**
- 1: ball stud
- 2: spherical head portion
- 3: socket
- 4: shaft
- 5: knuckle
- 6: dust cover
- 7: small-diameter opening portion
- 8: large-diameter opening portion
- 9: pressing ring
- 31: groove
- 41: outer peripheral surface
- 51: annular step portion
- 52: space
- 71: outer peripheral surface
- 72: annular lip
- 73: reinforcing ring
- 74: dust lip
- 75: projection
- 76: annular seal
- 511: inner peripheral surface

## Claims

1. A dust cover (6) for a ball joint structured such that a spherical head portion (2) formed in one end of a ball stud (1) is retained within a socket (3), a shaft (4) in the other end of said ball stud (1) is fastened and fixed to a knuckle (5), a one end large-diameter opening portion (8) is fixed and retained to an outer peripheral surface of said socket (3), and the other end small-diameter opening portion (7) is retained to said shaft (4), and made of an elastic material,
wherein an annular step portion (51) is formed in an inner peripheral side end portion which comes into contact with said dust cover (6) in said knuckle (5), a part of said small-diameter opening portion (7) is inserted into a space (52) which is formed by said annular step portion (51) and an outer peripheral surface (41) of said shaft (4), and an outer peripheral surface (71) of said small-diameter opening portion (7) is constrained by an inner peripheral surface (511) of said annular step portion (51).

2. The dust cover for the ball joint according to claim 1, wherein said inner peripheral surface (511) of said annular step portion (51) is formed as a conical surface shape which is increased its diameter toward an inner side of said space (52).

3. The dust cover for the ball joint according to claim 2, wherein the outer peripheral surface (71) of said small-diameter opening portion (7) is formed as a conical surface shape in correspondence to the conical surface shape of said inner peripheral surface (511).

4. The dust cover for the ball joint according to claim 1 or 2, wherein an annular lip (72) coming into contact with said inner peripheral surface (511) of said annular step portion (51) is formed in the outer peripheral surface (71) of said small-diameter opening portion (7).

5. The dust cover for the ball joint according to claim 1 or 2, wherein a plurality of projections (75) coming into contact with said inner peripheral surface (511) of said annular step portion (51) are formed in the outer peripheral surface (71) of said small-diameter opening portion (7) so as to be circumferentially uniform.

## Amended claims

### Amended claims under Art. 19.1 PCT

**1.** (Deleted)

**2.** (Amended) A dust cover (6) for a ball joint structured such that a spherical head portion (2) formed in one end of a ball stud (1) is retained within a socket (3), a shaft (4) in the other end of said ball stud (1) is fastened and fixed to a knuckle (5), a one end large-diameter opening portion (8) is fixed and retained to an outer peripheral surface of said socket (3), and the other end small-diameter opening portion (7) is retained to said shaft (4), and made of an elastic material,
wherein an annular step portion (51) is formed in an inner peripheral side end portion which comes into contact with said dust cover (6) in said knuckle (5), a part of said small-diameter opening portion (7) is inserted into a space (52) which is formed by said annular step portion (51) and an outer peripheral surface (41) of said shaft (4), and an outer peripheral surface (71) of said small-diameter opening portion (7) is constrained by an inner peripheral surface (511) formed as a conical surface shape which is increased its diameter toward an inner side of said space (52) of said annular step portion (51).

**3.** The dust cover for the ball joint according to claim 2, wherein the outer peripheral surface (71) of said small-diameter opening portion (7) is formed as a conical surface shape in correspondence to the conical surface shape of said inner peripheral surface (511).

**4.** (Amended) The dust cover for the ball joint according to claim 2, wherein an annular lip (72) coming into contact with said inner peripheral surface (511) of said annular step portion (51) is formed in the outer peripheral surface (71) of said small-diameter opening portion (7).

**5.** (Amended) The dust cover for the ball joint according to claim 2, wherein a plurality of projections (75) coming into contact with said inner peripheral surface (511) of said annular step portion (51) are formed in the outer peripheral surface (71) of said small-diameter opening portion (7) so as to be circumferentially uniform.

Statement under Art. 19.1 PCT
Claims 1 to 5 have been determined to have no inventive step in International Search Report.

Specifically, the inventions according to claims 1 and 4 do not have any inventive step on the basis of the documents 1 and 2 which were cited in the International Search Report.

The document 1 discloses a dust cover for a ball joint structured such that a spherical head portion formed in one end of a ball stud is retained within a socket, a shaft in the other end of the ball stud is fastened and fixed to a knuckle, a one end large-diameter opening portion is fixed and retained to an outer peripheral surface of the socket, and the other end small-diameter opening portion is retained to the shaft, and made of an elastic material.

Further, it has been determined that the document 2 discloses that the seal portion 55a provided in the dust cover 53 is inserted into the columnar concave portion 41 a formed in the tie rod arm 41, and the seal lip 55c coming into contact with the inner peripheral surface 41 c of the concave portion 41 a is annularly formed in the seal portion 55a.

However, the inner peripheral surface 41 c of the concave portion 41 a in the document 2 is formed as the cylindrical shape, and the seal portion 55a easily gets out of the concave portion 41 a in the case that the force pulling to the tie rod end 45a side is applied to the seal portion 55a.

On the other hand, in the invention according to the amended claim 2, even in the case that the force pulling toward the socket (3) side is applied to the small-diameter opening portion (7), the small diameter opening portion (7) is hard to get out of the space (52), by employing the inner peripheral surface (511) which is formed as a conical surface shape which is increased its diameter toward an inner side of the space (52).

As mentioned above, the amended claim 2 is provided with "the inner peripheral surface (511) which is formed as a conical surface shape which is increased its diameter toward an inner side of the space (52)" which is not disclosed in any cited documents.

Therefore, the amended claim 2 has an inventive step in relation to the cited documents.

Further, claims 3 to 5 which are dependent on the amended claim 2 have an inventive step.
